# EUROPEAN PATENT APPLICATION

(11) **EP 2 533 008 A1**
(43) Date of publication of application: **12.12.2012**
(21) Application number: 12169283.4
(22) Date of filing: 24.05.2012
(51) Int. Cl.: G01B 11/24, G06T 7/00

(54) **Vehicle optical sensor system**

(30) Priority: 08.06.2011 US 201113155447
(71) Applicant: Delphi Technologies, Inc., Troy, MI 48007 (US)
(72) Inventor: Taylor, Ronald M., Greentown, IN 46936 (US)
(74) Representative: Denton, Michael John

(57) **Abstract**

An optical sensor system (20) adapted for use on a vehicle (10) including a plurality of optoelectronic devices (36, 40) and a single high efficiency first lens (32). The optical sensor system (20) is positioned on the vehicle (10) to view a field of view (22) about the vehicle (10). The optical sensor system (20) may provide multiple independent video signals (38, 42) to multiple vehicle warning and control systems (52, 54). Each video signal (38, 42) that is generated by each optoelectronic device (36, 40) may be optimized for a specific vehicle warning or control system (52, 54) by using additional second lenses (44) to change the field of view (22), optical filters (50) to change the spectral sensitivity, and/or independent exposure times to change the light sensitivity or dynamic range. The optoelectronic devices (36, 40) may be optoelectronic dies or cores, such as those used in wafer level cameras.

## Description

### TECHNICAL FIELD

The invention generally relates to a vehicle optical sensor system, and more particularly relates to an optical sensor system with multiple optoelectronic devices receiving images through a common lens.

### BACKGROUND OF THE INVENTION

Optical sensor systems are frequently used in automobiles and other vehicles to provide images of areas around the vehicle. In some instances, these images are used by various vehicle warning and control systems. In the example of forward looking optical sensor systems, the images provided by the sensor may be used as inputs for collision avoidance, lane departure detection, forward collision warning, side warning, adaptive cruise control, night vision, headlight control, rain sensing systems and others. Typically, a forward looking optical sensor system is located behind the windshield near the rear view mirror to obtain a view of the road ahead which is similar to the driver's view. Optical sensor systems may also be used to view the area behind a vehicle for backing up, trailer towing, rearward collision warning, and rear blind zone warning systems. Additionally, optical sensor systems may be used by to determine occupant position for restraint systems, rear seat occupant monitoring, or security and intrusion detection systems.

The cost of individual sensor systems for each of these vehicle warning or control systems, plus the challenges of efficiently packaging multiple optical sensor systems in a vehicle make it desirable to use a single sensor system to provide images to multiple vehicle warning and control systems. Unfortunately, performance tradeoffs exist when using a single optical sensor system due to light sensitivity, spectrum sensitivity, and field of view requirements specific to each vehicle warning and control system. These performance tradeoffs have previously precluded optimum performance for every vehicle warning and control system.

For example, a night vision system may require an optical sensor system with high light sensitivity because of the need to sense contrast of objects at long ranges with very little active illumination. In contrast, a lane departure system may accommodate an optical sensor system with lower light sensitivity because daylight or headlights (at closer ranges) provide sufficient lighting.

Light sensitivity is primarily determined by the pixel size of the optoelectronic device used in the optical sensor system to convert light to an electrical signal; a larger pixel has more area available for photons to strike the pixel and be absorbed. As used herein, an optoelectronic device is a component of an optical sensor system that may be operable to generate a video signal. However, a larger pixel size requires a larger optoelectronic device for equivalent pixel resolution. Light sensitivity for a given pixel size may be increased by increasing the exposure time. However, longer exposure time will decrease the frame rate of the images. Additionally, light sensitivity can be increased by using a larger aperture lens to allow more light to fall on the pixels of the sensor. However, a larger aperture usually requires a larger lens, which increases the packaging size of the optical sensor system.

Different vehicle warning and control systems may also require an optical sensor system with different spectrum sensitivity. For example a tail light detection system may require sensitivity to red light, a lane departure detection system may require sensitivity to yellow light, and a night vision system may require sensitivity to infrared light. There are performance tradeoffs that may be required if a single optical sensor system is used with all three of these vehicle warning and control systems.

Different vehicle warning and control systems may also require an optical sensor system with a different field of view. For example, a rain detection system may need a wide field of view while an adaptive cruise control system may need a narrower field of view. Again, using a single optical sensor system may require performance tradeoffs.

### SUMMARY OF THE INVENTION

In accordance with one embodiment of this invention, an optical sensor system adapted for use on a vehicle is provided. The optical sensor system includes a first lens positioned on the vehicle to observe a field of view about the vehicle. The first lens is characterized as defining a focal plane. A plurality of optoelectronic devices are arranged about the focal plane. The plurality of optoelectronic devices includes a first optoelectronic device operable to generate a first video signal indicative of a first image corresponding to first portion of the field of view and a second optoelectronic device operable to generate a second video signal of a second image corresponding to a second portion of the field of view. The optical sensor system may include an aperture interposed between the first optoelectronic device and the first lens. The optical sensor system may also include an optical filter interposed between the first optoelectronic device and the first lens. The first optoelectronic device may be characterized as having a first exposure time and the second optoelectronic device may be characterized as having a second exposure time independent of the first exposure time. The first optoelectronic device may be configured to be sensitive to a first light wavelength range and the second optoelectronic device may be configured to be sensitive to a second light wavelength range independent of the first light wavelength range.

In another embodiment of the present invention, the optical sensor system may include a second lens interposed between the second optoelectronic device and the first lens. The second lens may be adapted to change the second image to a third portion of the field of view distinct from the second portion. The second lens may include optical distortion correction characteristics.

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE DRAWINGS

The present invention will now be described, by way of example with reference to the accompanying drawings, in which:

Fig. 1 is an illustration of a field of view about a vehicle of an optical sensor system in accordance with one embodiment;

Fig. 2 is an illustration of an optical sensor system in accordance with one embodiment;

Fig. 3 is an illustration of a first image corresponding to a first portion of the field of view and a second image corresponding to a second portion of the field of view in accordance with one embodiment;

Fig. 4 is an illustration of a first image corresponding to a first portion of the field of view and a second image corresponding to a narrow third portion of the field of view in accordance with one embodiment;

Fig. 5 is an illustration of a first image corresponding to a first portion of the field of view and a second image corresponding to a wide third portion of the field of view in accordance with one embodiment;

Fig. 6 is an illustration of a first image corresponding to a first portion of the field of view and a second image corresponding to a third portion that overlaps the first portion of the field of view in accordance with one embodiment;

Fig. 7 is an illustration of an optical sensor system in accordance with an alternate embodiment;

Fig. 8 is an illustration of a field of view about a vehicle of an optical sensor system in accordance the alternate embodiment shown in Fig. 7; and

Fig. 9 is a table detailing the configuration of the optoelectronic devices in accordance with the alternate embodiment shown in Fig. 7.

### DESCRIPTION OF THE PREFERRED EMBODIMENT

While the specification concludes with claims defining the features of the invention that are regarded as novel, it is believed that the invention will be better understood from a consideration of the following description in conjunction with the drawing figures, in which like reference numerals are carried forward.

Developments in complementary metal oxide semiconductor optoelectronic device manufacturing technology have led to the creation of optoelectronic devices that offer significant size and cost advantages over optoelectronic devices used previously with automotive optical sensor systems. This manufacturing technology allows an optoelectronic device to be made at the semiconductor wafer die level, herein referred to as optoelectric dies. These optoelectronic dies are commonly used in wafer level cameras. Wafer level cameras are approximately one third the size of optical sensors used previously in automotive applications.

Because a wafer level camera enjoys a significant cost advantage compared to a single traditional optical sensor, it may be desirable to use wafer level cameras to provide video signals for optical based vehicle warning and control systems. By doing so, each wafer level camera could be optimized to the requirements of the various vehicle warning and control systems.

However, when adapting wafer level cameras to automotive applications was first considered, a disadvantage regarding light sensitivity was identified. The optoelectric dies used in wafer level camera have smaller pixels (typically less than 2 microns in diameter) when compared to pixels in optical sensors commonly used for automotive applications (typically about 6 microns in diameter). Additionally, the lens of the wafer level camera has a smaller aperture (typically f 2.8 or higher) when compared to optical sensors commonly used for automotive applications. The smaller aperture reduces the efficiency of the wafer level camera lens because the smaller aperture reduces the amount of light that can be focused onto the pixels. The combination of the smaller pixel size and a less efficient lens results in a wafer level camera having an inherent light sensitivity that is typically an order of magnitude less than what may be needed for many automotive optical sensors.

An optical sensor system with a single higher efficiency lens and several optoelectronic devices or optoelectronic dies may be used to replace several stand alone optical sensors. The higher efficiency lens would optimize the light gathering ability and focus light onto a focal plane that contains the plurality of optoelectronic devices. The higher efficiency lens is able to focus light to all of the optoelectronic devices at a higher efficiency than individual wafer level camera lenses. The higher efficiency lens could advantageously be of a broadband spectral design that would allow multiple wavelength spectra to be detected, e.g. visible through near-infrared wavelengths (wavelengths of approximately 380 to 1000 nanometers). The cost savings from using optoelectric dies may offset the additional cost of the higher efficiency lens. This optical sensor system may also be easier to package in the vehicle than several stand alone optical sensors.

Since the plurality of optoelectronic devices are each capable of independently generating a video signal, performance characteristics of each optoelectronic device may be optimized for multiple automotive warning and control functions by incorporating individual optical elements and unique signal processing. Thus, the optical sensor system can provide a plurality of video signals tailored to multiple vehicle warning and control systems.

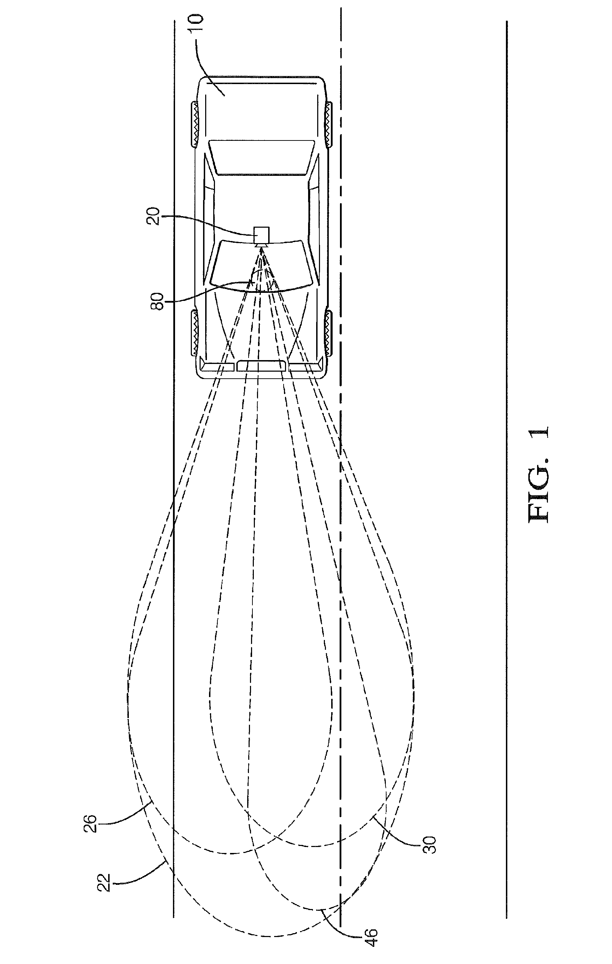

In accordance with an embodiment of an optical sensor system 20 adapted for use on a vehicle 10, Fig. 1 illustrates a non-limiting example of an optical sensor system 20 positioned on the vehicle 10 to observe a field of view 22 about the vehicle 10. The field of view 22 is illustrated as being forward of the vehicle 10 for detecting objects in or near the travel path of the vehicle 10, but may also be directed toward an area beside the vehicle 10 to detect objects such as vehicles in adjacent lanes. Alternately, the field of view 22 may be behind the vehicle 10 to detect, for example, objects behind the vehicle 10 while backing up or monitoring a trailer while towing. The field of view 22 may also include an area of the interior of the vehicle 10, for example to detect whether occupants are in a proper position to active a supplemental restraint system, such as an air bag, or to monitor passengers in the rear seats.

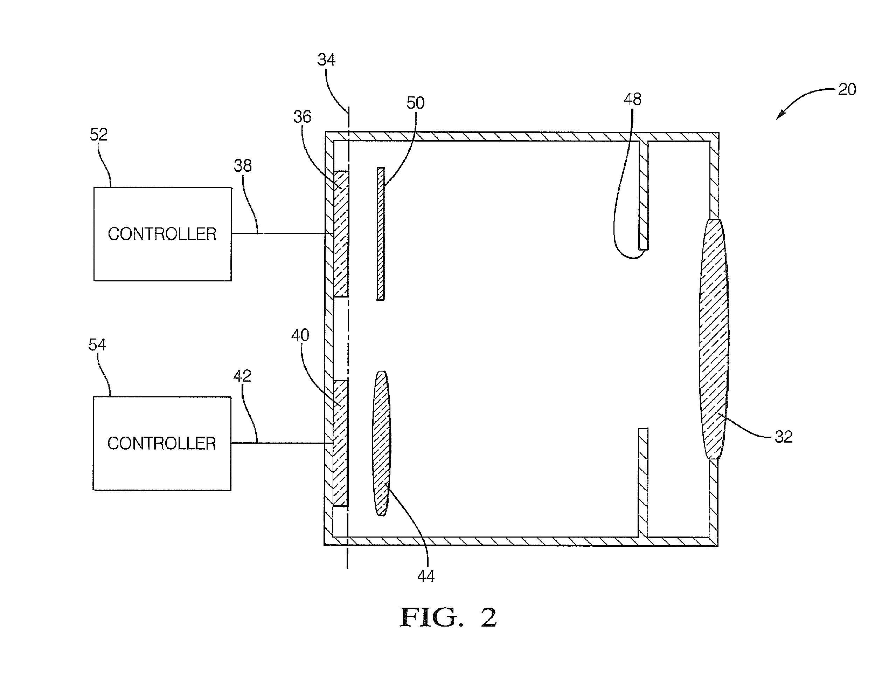

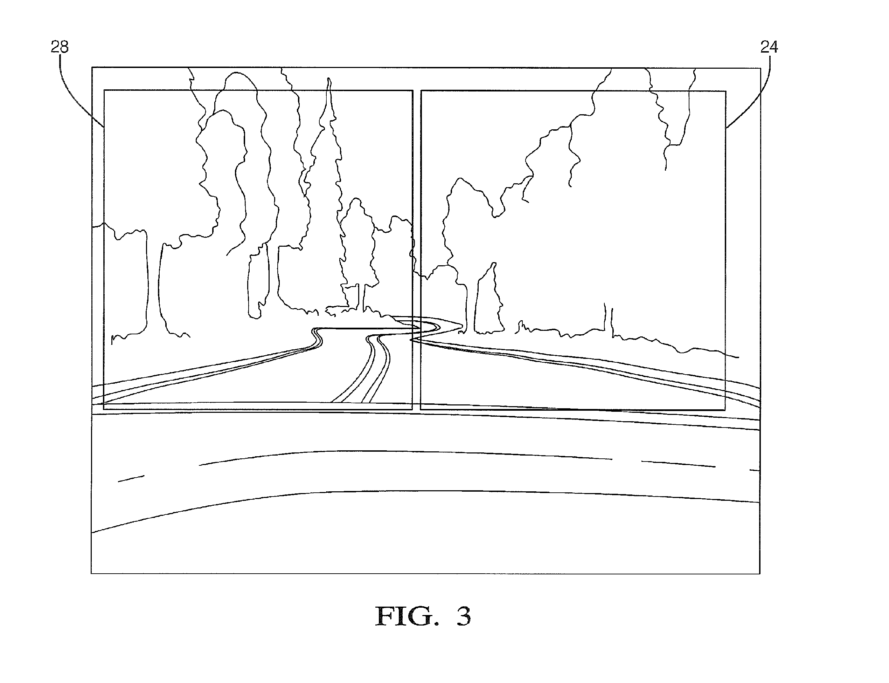

As shown in Fig. 2, the optical sensor system 20 includes a first lens 32. The first lens 32 may be characterized as defining a focal plane 34. The optical sensor system 20 also includes a plurality of optoelectronic devices 36, 40. The optoelectronic devices 36, 40 are arranged about the focal plane 34, i.e. on or relatively near the focal plane 34. The optoelectronic devices 36, 40 may be coplanar. One of the optoelectronic devices is described herein as a first optoelectronic device 36 that is operable to generate a first video signal 38 indicative of a first image 24, see Fig. 3. The first image 24 corresponds to a first portion 26 of the field of view 22, see Fig.1. Another of the optoelectronic devices is described herein as a second optoelectronic device 40 that is operable to generate a second video signal 42 of a second image 28, see Fig. 3. The second image 28 corresponds to a second portion 30 of the field of view 22, see Fig.1. Because the first optoelectronic device 36 and the a second optoelectronic device 40 are located at different points of the focal plane 34, the first and second portion 26, 30 of the field of view 22 may not overlap, as shown in Fig.1. Likewise, the first and second image 24, 28 may not overlap, as shown in Fig. 3.

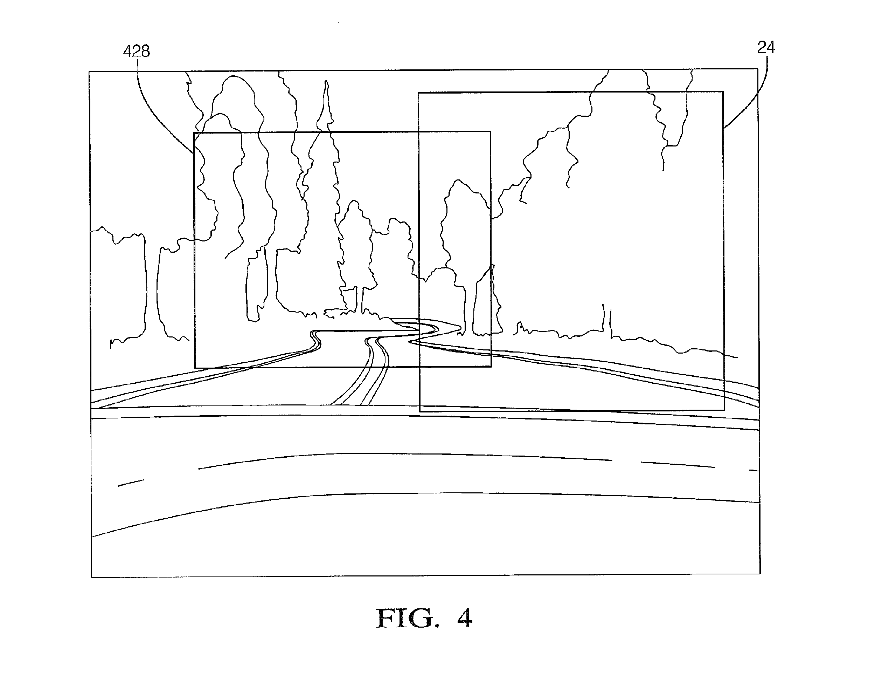

The optical sensor system 20 may include a second lens 44 interposed between the second optoelectronic device 40 and the first lens 32. That is, the second lens 44 is in a line of sight between the second optoelectronic device 40 and the first lens 32. The second lens 44 is adapted to cooperate with the first lens 32 to determine the second image 28 viewed by the second optoelectronic device 40, as shown in Fig. 3. The second lens 44 changes the second image 28 (shown in Fig. 3) that corresponds to a second portion 30 of the field of view 22 to a second image 428 (shown in Fig. 4). The second image 428 corresponds to a third portion 46 of the field of view 22 which is distinct from the second portion 30 as shown in Fig. 1. The third portion 46 of the field of view 22 may be wider or narrower than the second portion 30 of the field of view 22. Alternately, the third portion 46 of the field of view 22 may have a different centroid than the second portion 30. The second portion 30 of the field of view 22 may be changed to the third portion 46 to accommodate the requirements of various vehicle warning and control systems. For example, an adaptive cruise control system needs a relatively narrow field of view because it monitors objects directly in the path of the vehicle 10. In contrast, a forward collision warning system needs a relatively wide field of view because it monitors for objects in the path of the vehicle 10 and objects that may be crossing the vehicle's path.

The second lens 44 may be positioned very close to the second optoelectronic device 40. In a non-limiting example, the distance between the second lens 44 and the second optoelectronic device 40 may be on the same order as the diameter of the optoelectronic device, e.g. approximately 2 millimeters. In this example, it may be possible to configure the second lens 44 to increase or decrease the second portion 30 of the field of view 22 or change the centroid of the second image 28 without affecting the first lens' 32 primary optical characteristics. The second lens 44 may be coplanar with the first optoelectronic device 36 on the focal plane 34. Therefore, the second optoelectronic device 40 may be substantially parallel but noncoplanar with the first optoelectronic device 36. Herein, substantially parallel means within 10° of absolutely parallel in any axis. When the second lens 44 is located substantially at the first lens' 32 focal plane 34, spherical aberration, coma or other chromatic aberrations of the first lens 32 would not be significantly affected by the second lens 44.

In a non-limiting example, a negative meniscus shape lens could be used as a second lens 44 to change the second portion 30 of the field of view 22 to a narrower third portion 46 of the field of view 22. This may be used to optimize the second video signal 42 of a second image 428, as shown in Fig. 4, for use by a night vision system, adaptive cruise control system or other vehicle warning and control system that may require a relatively narrow field of view. A narrower field of view may be used to eliminate the need to process portions of the image that are not of interest. A narrower field of view may also be desired to enhance resolution of objects of interest within the field of view 22. Alternately, a narrower field of view may also be used to increase light sensitivity or dynamic range. In the example of an adaptive cruise control system, the system may only need to track objects in the path of the vehicle 10, so the field of view 22 may be limited to the area of the lane in front of the vehicle 10. In the example of a night vision system, the narrow field of view may be used to enhance light sensitivity.

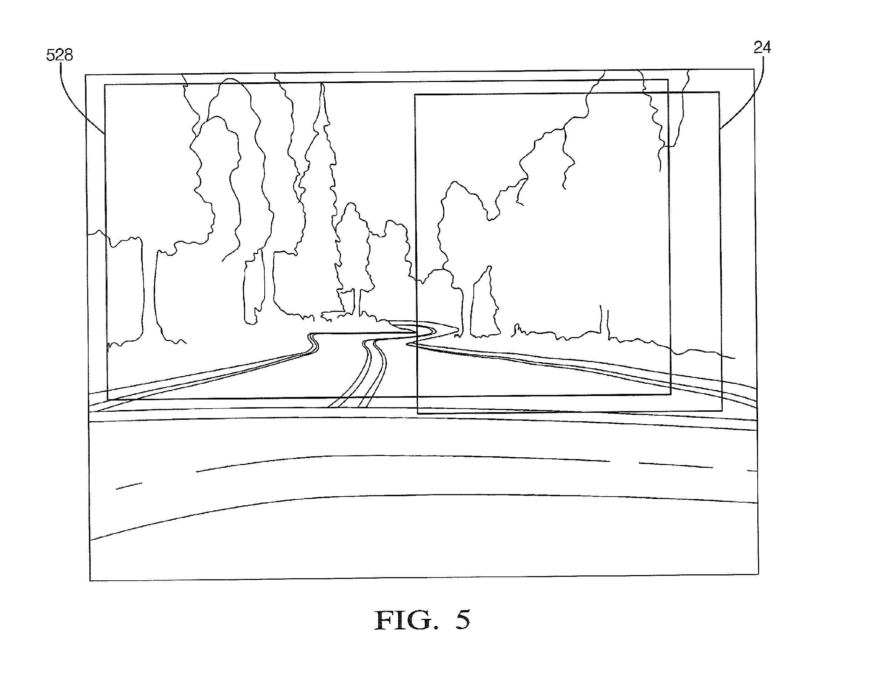

In another non-limiting example, a positive meniscus shape lens could be used as a second lens 44 to change the second portion 30 of the field of view 22 to a wider third portion 46 of the field of view 22. This may be used to optimize the second video signal 42 of a second image 528, as shown in Fig. 5, for use by a collision avoidance system, rain sensing system, or other vehicle warning and control system that may require a relatively wide field of view. In the example of a collision avoidance system, the system may need to track objects that may cross path of the vehicle 10, so the field of view 22 should encompass a wide area in front of the vehicle 10. In the example of a rain sensing system, the optical sensor system 20 is typically mounted near the windshield; therefore a wider field of view may be needed to avoid monitoring only a small portion of the windshield directly in front of the optical sensor system 20 for rain drops.

The second lens 44 may also be used to modify a first focal length of the first lens 32 to a second focal length. For example, the first lens 32 may be configured with a first focal length to focus on objects about 100 meters in front of the vehicle 10 to accommodate vehicle warning and control systems such as collision avoidance or night vision systems. On the other hand, the second lens 44 may cooperate with the first lens 32 to provide a different second focal length to focus on objects several centimeters in front of the optical sensor system 20, for example for use with a rain sensing system. As noted supra, the optical sensor system 20 may be mounted near the windshield. The image of interest of a rain sensing system is the front surface of the windshield and any rain drops that may be on the windshield. Therefore, the second focal length is set for an object distance of several centimeters.

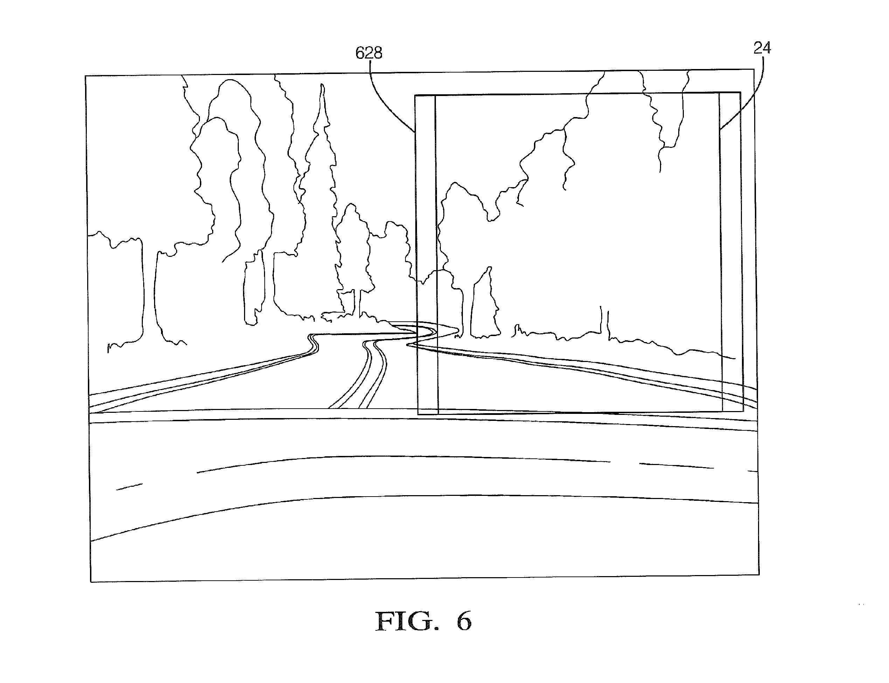

The second lens 44 may also change the centroid of the second portion 30 of the field of view 22 to a third portion 46 of the field of view 22 to optimize the second video signal 42 of a second image 628, as shown in Fig. 6. For example, the second image 28 may need to overlap the first image 24 but require different wavelength filtering or light wavelength range. In this example, an adaptive cruise control system may use a first image 24 from a daylight sensitive first optoelectronic device 36 during the day and a second image 28 with the same field of view from an infrared sensitive second optoelectronic device 40 at night.

Additionally, the second lens 44 may be characterized as having optical distortion correction features. For example, the optical distortion correction features may be used to correct optical distortion induced by the first lens 32 or the vehicle's windshield. Optical distortion correction may require an aspheric shaped second lens 44. The small size of the second lens 44 allows independent field of view and optical distortion corrections to be considered for each optoelectronic device which can allow optimized pixel resolution for a specific vehicle warning or control system.

The optical sensor system 20 may include an aperture 48 interposed between the first optoelectronic device 36 and the first lens 32. The aperture 48 controls the amount of light that enters the first lens 32 that falls on the optoelectronic devices 36, 40. The aperture 48 also cooperates with first lens 32 to determine a depth of field for the focal plane 34 of the first lens 32.

The optical sensor system 20 may also include an optical filter 50 interposed between the first optoelectronic device 36 and the first lens 32. That is, the optical filter 50 is in a line of sight between the first optoelectronic device 36 and the first lens 32. The optical filter 50 selectively transmits light having certain properties (e.g. a particular range of wavelengths), while blocking the remainder.

The optical filter 50 may be a wavelength filter. A wavelength filter may be configured to block or attenuate transmission of light at specific wavelengths. Examples of wavelength filters that may be used are:
- Visible light bandpass filter. Also known as a near-infrared cut filter.
   These filters are used to block infrared light due to the high sensitivity of many optoelectronic devices to near-infrared light.
- Near-infrared bandpass filter (transmits approximately 720 to 1000 nanometers)
- Yellow narrow bandpass filter for lane marker detection
- Red narrow bandpass filter for taillight detection
- Other monochromatic filter
- Neutral density filter
- LED bandpass filter for night vision illuminators (e.g. used with LED night vision illuminators with LED output at 850 nanometers or 940 nanometers)
Please note: this is not an exhaustive list of the types of wavelength filters that may be utilized.

The wavelength filter may allow the first optoelectronic device 36 to be optimized for one light wavelength band while the second optoelectronic device 40 may be optimized for another light wavelength band. As a non-limiting example, the first optoelectronic device 36 may be filtered for infrared light (e.g. 680 to 1000 nanometers) for use with a night vision system while the second optoelectronic device 40 may use visible wavelength light (e.g. 380 to 680 nanometers) for a lane departure warning system. Additionally a third optoelectronic device 766 may be filtered for red light for a taillight detection system while a fourth optoelectronic device 772 may be filtered for yellow light for a lane departure warning system. Individual filters allow the wavelength characteristics of each optoelectronic device to be optimized for a specific vehicle 10 warning or control system, rather than suboptimal wavelength characteristics by the use of a single camera filter.

Additionally, the optical filter 50 may include a polarizing filter. A polarizing filter may be used to reduce glare in the first image 24 generated by the first optoelectronic device 36.

The designation of the first and second optoelectronic device 36, 40 is arbitrary. It can be appreciated that an optical sensor system 20 may include both a second lens 44 and an optical filter 50 interposed between the first optoelectronic device 36 and the first lens 32.

The first optoelectronic device 36 may be characterized as having a first exposure time and the second optoelectronic device 40 may be characterized as having a second exposure time independent of the first exposure time. As a non-liming example, the first optoelectronic device 36 may have a short first exposure time that allows a high image frame rate as may be needed by a collision avoidance system or adaptive cruise control system. The second optoelectronic device 40 may have a long second exposure time that allows high light sensitivity as may be needed by a night vision system. It may be very difficult for an optical sensor with a single optoelectronic device as is currently used in automotive applications to be able to generate a video signal that would simultaneously meet the requirements of a high image frame rate and high light sensitivity as may be needed for a forward collision avoidance system and a night vision system.

The first optoelectronic device 36 may be configured to be sensitive to a first light wavelength range and the second optoelectronic device 40 may be configured to be sensitive to a second light wavelength range independent of the first light wavelength range. That is, the spectral sensitivity of the first optoelectronic device 36 may be centered at a different wavelength than the second optoelectronic device 40. The first light wavelength range may correspond to a visible light wavelength range and the second light wavelength range may correspond to an infrared light wavelength range. This may result in an optical sensor system 20 that has a greater wavelength range than may be possible with an optical sensor system that has a single optoelectronic device. In a non-limiting example, the first optoelectronic device 36 may provide a first video signal 38 to a first vehicle warning or control system 52 that utilizes visible light such as a lane departure warning system while the second optoelectronic device 40 may provide a second video signal 42 to a second vehicle warning or control system 54 that utilizes infrared light, such as a night vision system used in combination with an infrared illuminator.

The first optoelectronic device 36 may include an optoelectronic die. An optoelectronic die refers to an optoelectronic device that is made at the semiconductor wafer die level. Use of optoelectronic dies, such as those used in a wafer level camera (for example, OVM7690 produced by OmniVision Technologies), may allow the optical sensor system 20 with multiple optoelectronic devices to be packaged in a similar size as an optical sensor system using a single conventional optoelectronic device.

The first video signal 38 may be processed independently of the second video signal 42. The first video signal 38 may be provided to a first vehicle warning or control system 52, for example a collision warning system. The second video signal 42 may be provided to a second vehicle warning or control system 54, for example a night vision system as shown in Fig. 2.

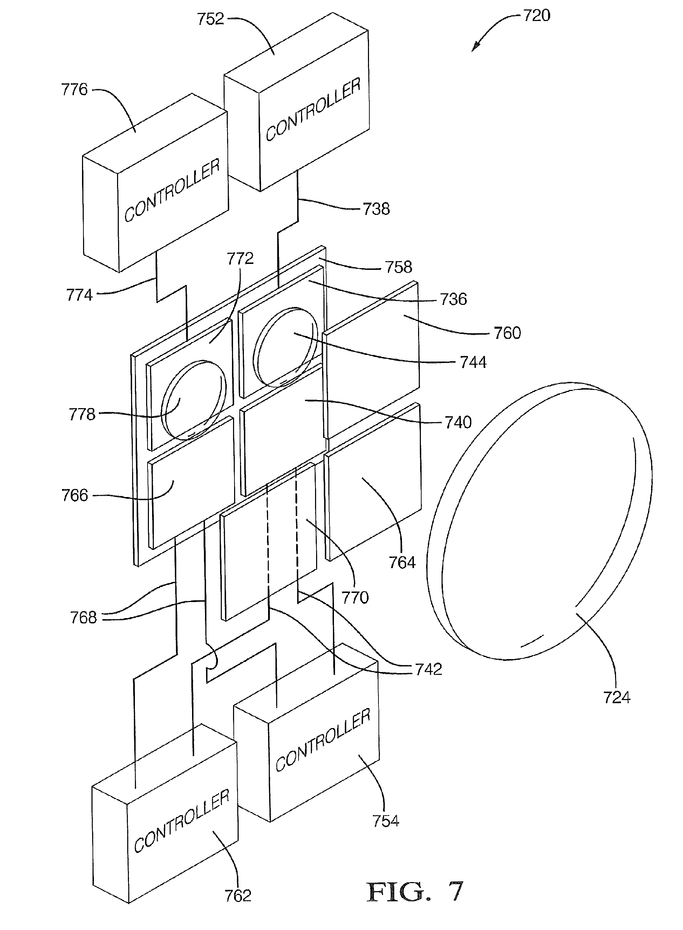

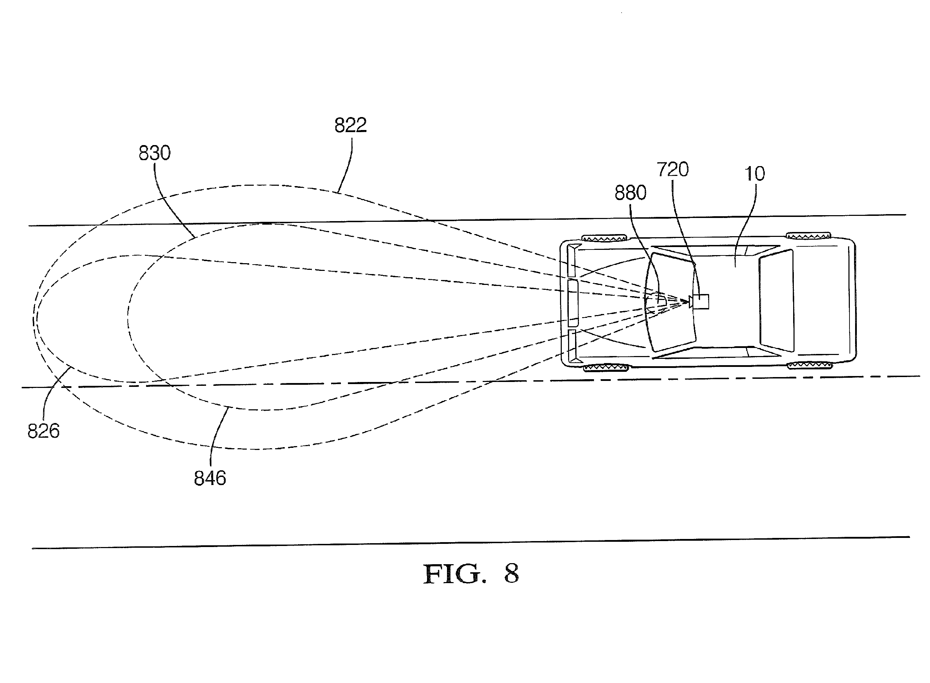

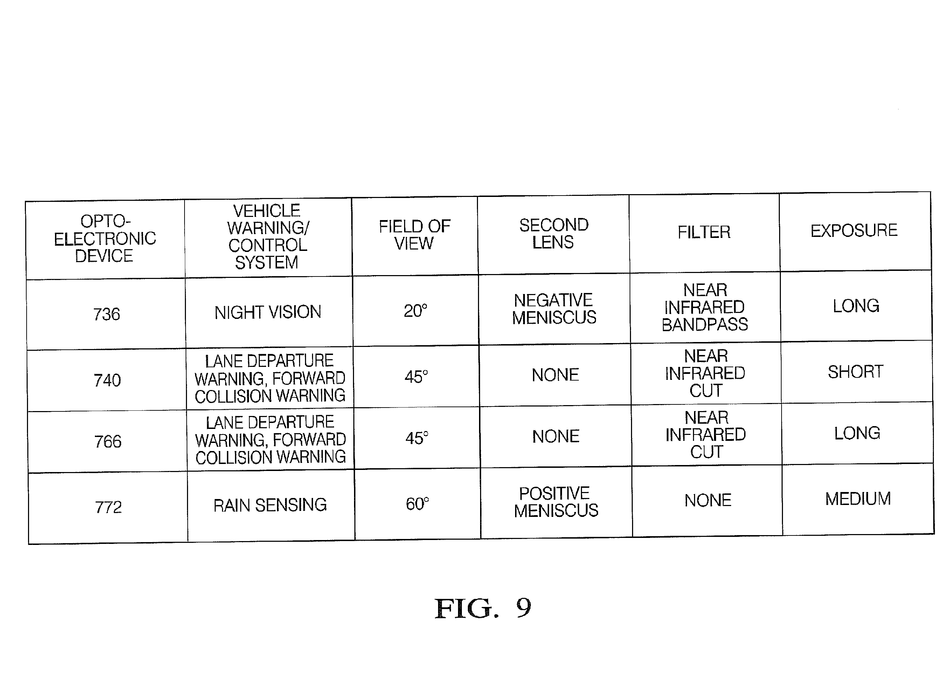

A non-limiting example of an optical sensor system 720 shown in Figs. 7 and 8 includes a first lens 724 and four optoelectronic devices 736, 740, 766, 772 placed in a planar arrangement on a common carrier 758. The first lens 724 is configured to provide a field of view 822 of about 45 degrees to each of the optoelectronic devices 736, 740, 766, 772. The four optoelectronic devices 736, 740, 766, 772 are optoelectronic dies. A table detailing the configuration of the optoelectronic devices 736, 740, 766, 772 is contained in Fig. 9.

The first optoelectronic device 736 provides a first video signal 738 to a first vehicle warning system 752, in this example a night vision system. The spectral sensitivity of the first optoelectronic device 736 is in the infrared light wavelength range. The first optoelectronic device 736 has a long exposure time. The first optoelectronic device 736 includes a first filter 760, in this example a near infrared filter. The first optoelectronic device 736 also includes a second lens 744 that narrows the first portion 826 of the field of view 822 to about 20 degrees.

The second optoelectronic device 740 provides a second video signal 742 to a second and third vehicle warning system 754, 762, in this example a lane departure warning system and a forward collision warning system. The spectral sensitivity of the second optoelectronic device 740 is in the visible light wavelength range. The second optoelectronic device 740 has a short exposure time. The second video signal 742 therefore has a higher frame rate that may more accurately capture a dynamic image. The second optoelectronic device 740 includes a second filter 764, in this example a near infrared cut filter. The second optoelectronic device 740 views a second portion 830 of the field of view 822.

The third optoelectronic device 766 provides a third video signal 768 to the same second and third vehicle warning systems 754, 762. The third optoelectronic device 766 also is sensitive to visible light and includes a third filter 770, also a near infrared cut filter. The third optoelectronic device 766 may also share the second filter 764 with the second optoelectronic device 740. The third optoelectronic device 766 views a third portion 846 of the field of view 822. However, in contrast to the second optoelectronic device 740, the third optoelectronic device 766 has a long exposure time. The third optoelectronic device 766 therefore has a lower frame rate and may have a higher light sensitivity than the second optoelectronic device 740. The second and third video signals 742, 768 may be combined to generate a video signal that has a higher dynamic range then either of the input video signals 742, 768 using known signal processing techniques.

The fourth optoelectronic device 772 provides a fourth video signal 774 to a fourth vehicle control system 776, in this example a rain detection system. The fourth optoelectronic device 772 is sensitive to visible light. The fourth optoelectronic device 772 has a medium exposure time. The fourth optoelectronic includes a third lens 778 that widens a fourth portion 880 of the field of view 822 to about 60 degrees.

The first, second third, and fourth video signals 738, 742, 768, 774 may be output from the optical sensor system 720 in an analog or digital format. The video signals 738, 742, 768, 774 may be multiplexed using known techniques to reduce the number transmission channels (e.g. wired or wireless connections) needed to transmit the video signals 738, 742, 768, 774.

Accordingly, an optical sensor system 20 is provided. The optical sensor system 20 utilizes a single high efficiency first lens 32 with multiple optoelectronic devices to provide multiple independent video signals to multiple vehicle warning and control systems. Each video signal generated by the optical sensor system 20 may be optimized for a specific vehicle warning or control system by using an additional second lens 44, an optical filter 50, and independent exposure times. The high efficiency (i.e. large-aperture) first lens 32 may yield a gain of about 300 to 500 percent in light sensitivity compared to a typical wafer level camera used as an optical sensor. Combining signals from optoelectronic devices with different exposure times may result in an improvement of about 200 percent in dynamic range compared to a typical wafer level camera.

The optical sensor system 20 may provide video signals to multiple vehicle warning or control systems at a lower overall system cost than using individual optical sensors. The optical sensor system 20 also offers advantages in packaging optical sensors in the vehicle 10 since multiple optical sensors can be incorporated into a single module. This eliminates the necessity to package multiple optical sensors separately. The optical sensor system 20 may also reduce the amount of wiring required because power and ground connections need only be made to one module rather than multiple optical sensors.

## Claims

1. An optical sensor system (20) adapted for use on a vehicle (10), said optical sensor system (20) comprising:
a first lens (32) positioned on the vehicle (10) to observe a field of view (22) about the vehicle (10), said first lens (32) characterized as defining a focal plane (34); and
a plurality of optoelectronic devices (36, 40) arranged about the focal plane (34), wherein said plurality of optoelectronic devices (36, 40) includes a first optoelectronic device (36) operable to generate a first video signal (38) indicative of a first image (24) corresponding to first portion (26) of the field of view (22), and a second optoelectronic device (40) operable to generate a second video signal (42) of a second image (28) corresponding to a second portion (30) of the field of view (22).

2. The optical sensor system (20) of claim 1, wherein the optical sensor system (20) further comprises a second lens (44) interposed between the second optoelectronic device (40) and the first lens (32), said second lens (44) is adapted to change the second image (28) to a third portion (46) of the field of view (22) distinct from the second portion (30).

3. The optical sensor system (20) of claim 2, wherein the second lens (44) is characterized as having optical distortion correction features.

4. The optical sensor system (20) of claim 1, wherein the optical sensor system (20) further comprises an aperture (48) interposed between the first optoelectronic device (36) and the first lens (32).

5. The optical sensor system (20) of claim 1, wherein the optical sensor system (20) further comprises an optical filter (50) interposed between the first optoelectronic device (36) and the first lens (32).

6. The optical sensor system (20) of claim 5, wherein the optical filter (50) comprises a wavelength filter.

7. The optical sensor system (20) of claim 5, wherein the optical filter (50) comprises a polarizing filter.

8. The optical sensor system (20) of claim 1, wherein the first optoelectronic device (36) is characterized as having a first exposure time and the second optoelectronic device (40) is characterized as having a second exposure time independent of the first exposure time.

9. The optical sensor system (20) of claim 1, wherein the first optoelectronic device (36) is configured to be sensitive to a first light wavelength range and the second optoelectronic device (40) is configured to be sensitive to a second light wavelength range independent of the first light wavelength range.

10. The optical sensor system (20) of claim 9, wherein the first light wavelength range corresponds to a visible light wavelength range and the second light wavelength range corresponds to an infrared light wavelength range.

11. The optical sensor system (20) of claim 1, wherein the first optoelectronic device (36) comprises an optoelectronic die.

12. The optical sensor system (20) of claim 1, wherein the first video signal (38) is processed independent of the second video signal (42).

13. The optical sensor system (20) of claim 1, wherein the plurality of optoelectronic devices (36, 40) are coplanar.

14. The optical sensor system (20) of claim 1, wherein the plurality of optoelectronic devices (36, 40) are substantially parallel and noncoplanar.
